# EUROPÄISCHE PATENTSCHRIFT

(11) **EP 3 374 645 B1**
(45) Veröffentlichungstag und Bekanntmachung des Hinweises auf die Patenterteilung: **11.08.2021**
(21) Anmeldenummer: 16778202.8
(22) Anmeldetag: 27.09.2016
(51) Int. Cl.: F15B 1/08, F16K 1/30, F16K 17/00

(54) **SICHERHEITSVORRICHTUNG**
SAFETY DEVICE
DISPOSITIF DE SECURITE

(30) Priorität: 14.11.2015 DE 102015014797
(43) Veröffentlichungstag der Anmeldung: 19.09.2018
(73) Patentinhaber: Hydac Technology GmbH, 66280 Sulzbach/Saar (DE)
(72) Erfinder: KLOFT, Peter, 56235 Ransbach-Baumbach (DE); BALTES, Herbert, 66679 Losheim (DE)
(74) Vertreter: Bartels, Martin Erich Arthur
(86) Internationale Anmeldenummer: PCT/EP2016/001605
(87) Internationale Veröffentlichungsnummer: WO 2017/080627

(56) Entgegenhaltungen:
- EP-A1- 2 792 931
- WO-A2-02/46621
- DE-A1- 2 052 621
- DE-A1-102004 015 629
- DE-A1-102013 211 344
- US-A- 3 000 542
- US-A1- 2006 137 742

## Beschreibung

Die Erfindung betrifft eine Sicherheitsvorrichtung mit den Merkmalen im Oberbegriff von Anspruch 1.

Derartige Sicherheitsvorrichtungen sind Stand der Technik. In Systemen, bei denen gasförmige Arbeitsmedien benutzt werden, werden Sicherheitsvorrichtungen dieser Gattung eingesetzt, um im Störungsfall einen sicheren, d.h. die Umgebung nicht gefährdenden Druckabbau zu erreichen. Insbesondere bei Systemen, die Druckspeicher enthalten, bei denen im Betrieb hohe Gasdrücke entstehen, die 100 bar oder mehr betragen können, muss sichergestellt sein, dass bei einen sicheren Grenzwert übersteigenden Druckanstiegen, wie sie sich aufgrund von Betriebsstörungen durch Fehlfunktion von Systemkomponenten oder durch Temperaturerhöhungen, etwa in einem Brandfall, ergeben, ein sicherer Druckabbau durch Ansprechen der Bersteinrichtung erfolgt.

Die DE 2 052 621 offenbart eine Sicherheitsvorrichtung mit einem Gehäuse, einer Bersteinrichtung und einer Anschlussstelle für einen Druckspeicher, der über die Anschlussstelle gasseitig mit der Bersteinrichtung verbindbar ist, wobei die Bersteinrichtung mittels eines ansteuerbaren Kraftelements auslösbar ist, die im ausgelösten Zustand eine gasseitige Entleerung des Druckspeichers erlaubt, wobei die Bersteinrichtung eine Berstscheibe aufweist, die beim Ansteuern des Kraftelements auslöst, wobei das Kraftelement ein pyrotechnischer Gegenstand ist, der bei gezündeter Treibladung ein Wandstück des Gehäuses derart verformt oder zerstört, dass die darin aufgenommene Bersteinrichtung auslöst, wobei die Berstscheibe der Bersteinrichtung in einem druckführenden Kanal im Gehäuse festgelegt ist und diesen Kanal druckdicht abschließt, der auf die Gasseite des Druckspeichers führbar ist und in die Umgebung ausmündet, wobei die Berstscheibe innerhalb des Kanals in einer gemeinsamen Ebene mit der Wirkrichtung des pyrotechnischen Kraftelements liegt und wobei das mittels der Treibladung zerstör- oder verformbare Wandstück des Gehäuses quer zu dieser Ebene verläuft.

Die DE 10 2004 015 629 A1, die US 3 000 542, die WO 02/46621 A2, die EP 2 792 931 A1 und die US 2006/0137742 A1 beschreiben weitere Sicherheitsvorrichtungen.

Ausgehend vom diesbezüglichen Stand der Technik stellt sich die Erfindung die Aufgabe, eine Sicherheitsvorrichtung zur Verfügung zu stellen, die ein besonders sicheres Ansprechen der einem Druckspeicher zugeordneten Bersteinrichtung gewährleistet.

Erfindungsgemäß ist diese Aufgabe durch eine Sicherheitsvorrichtung gelöst, die die Merkmale des Patentanspruchs 1 in seiner Gesamtheit aufweist.

Nach dem Kennzeichen des Anspruchs 1 ist die erfindungsgemäße Sicherheitsvorrichtung dadurch gekennzeichnet, dass der Kanal in die freie Umgebung ausmündet, dass die Berstscheibe mittels eines Gewindeeinsatzes festgelegt ist, der von der Gehäuseumgebungsseite her in eine Gewindebohrung des Kanals eingeschraubt ist und der die Berstscheibe gegen eine am inneren Ende der Gewindebohrung gebildete Schulter festklemmt, und dass der Umfangsrand der Berstscheibe innerhalb einer am Ende der Gewindebohrung befindlichen Ringnut um das Ende des Einsatzes umgelegt ist. Dadurch, dass gemäß Anspruch 1 die Bersteinrichtung mittels eines ansteuerbaren Kraftelements auslösbar ist, ist im Unterschied zum Stand der Technik, wo die Bersteinrichtung lediglich auf das Erreichen eines einen gegebenen Wert übersteigenden Überdrucks anspricht, ein Auslösen im Stör- oder Gefahrenfall ohne herrschenden Überdruck oder bereits vor Erreichen des Überdrucks auslösbar. Dadurch eröffnet sich die Möglichkeit, auf Gefahrensituationen, etwa in einem Brandfall, durch Druckabbau zu reagieren, bevor es zu einem gefährlichen Überdruck, wie durch Erhitzung im Brandfall, kommt. Dadurch eignet sich die Erfindung mit besonderem Vorteil für Anwendungen bei mobilen Systemen, bei denen Druckspeicher vorhanden sind, wie bei Fahrzeugen, die in Verbindung mit einem hydrostatischen Fahrantrieb mit einer Energie-Rückgewinnungseinrichtung versehen sind. Bei solchen Systemen ist zumindest ein zur Speicherung von Bremsenergie auf ein hohes Druckniveau aufladbarer Druckspeicher vorhanden, vergleiche hierzu beispielsweise das Dokument DE 10 2008 062 836 B3, das ein derartiges Antriebssystem für Nutzfahrzeuge oder andere auf der Straße bewegbare Fahrzeuge zeigt. Die erfindungsgemäße Sicherheitsvorrichtung ermöglicht bei Einsatz bei solchen Fahrzeugen einen gefahrlosen, vorbeugenden Druckabbau bei Störungen, wie einem Fahrzeugcrash oder dergleichen.

Dadurch, dass als Kraftelement ein pyrotechnischer Gegenstand vorgesehen ist, der bei gezündeter Treibladung ein Wandstück eines Gehäuses derart verformt oder zerstört, dass die darin aufgenommene Bersteinrichtung auslöst, führt die bei Zündung der Treibladung freigesetzte Stoßwelle selbst zur Zerstörung der Berstscheibe.

Durch Bruch der Berstscheibe ist eine unmittelbare Verbindung zwischen Gasseite des Druckspeichers und Umgebung gebildet.

Die Ansteuerung des Kraftelements kann an eine Sensorik gekoppelt sein, insbesondere an die Sensorik eines Airbag, die beim Auslösen des Airbag auch das Kraftelement betätigt. Dies hat den Vorteil, dass für die Detektion eines Unfallgeschehens, bei dem eine sichere Druckentlastung erforderlich ist, keine eigene Sensorik benötigt wird.

Bei besonders vorteilhaften Ausführungsbeispielen trägt das Kraftelement, gekammert an seiner vorderen Stirnseite, die pyrotechnische, elektrisch zu zündende Treibladung, die an das Wandstück anschließt, an das die Bersteinrichtung zumindest teilweise angelegt ist. Bei dieser Anordnung ist das Wandstück der von der Treibladung erzeugten Druckstoßwelle unmittelbar ausgesetzt.

In besonders vorteilhafter Weise kann das Gehäuse auch den Träger für einem betreffenden, zu sichernden Druckspeicher zugehörige Funktionselemente bilden, wie einen Drucksensor, einen Temperatursensor, eine Schmelzsicherungseinrichtung, einen Befüllanschluss für Druckgas und/oder einen Prüfanschluss für eine Prüfeinrichtung. Durch eine Schmelzsicherungseinrichtung, die eine temperaturabhängige Druckentlastung auch ohne Betätigung des Kraftelements bewirkt, steht ein zusätzlicher Sicherheitsaspekt zur Verfügung.

Bei vorteilhaften Ausführungsbeispielen sind sämtliche im Gehäuse verwendeten Funktionselemente, einschließlich der Bersteinrichtung, an ein gemeinsames Kanalsystem angeschlossen, das mit der Gasseite des Druckspeichers druckführend in Verbindung steht. Dadurch lässt sich die Gesamtanordnung in Form einer kompakten Baueinheit realisieren.

Bei dem zu sichernden Druckspeicher kann es sich um einen Kolbenspeicher handeln, der Teil eines Energie-Rückgewinnungssystems bei einem Kraftfahrzeug ist und der auf seiner Speicher-Gehäuseseite mit dem Druckgas das blockartig aufgebaute Gehäuse mit seinen einzelnen Funktionselementen trägt.

Nachstehend ist die Erfindung anhand eines in der Zeichnung dargestellten Ausführungsbeispiels im Einzelnen erläutert. Es zeigen:
- Fig. 1: einen Längsschnitt eines Druckspeichers, der gasseitig mit einem schematisch vereinfacht angedeuteten Ausführungsbeispiel der erfindungsgemäßen Sicherheitsvorrichtung versehen ist;
- Fig. 2: eine Draufsicht des Ausführungsbeispiels der Sicherheitsvorrichtung, wobei die obere Deckwand des Gehäuses durchsichtig dargestellt ist;
- Fig. 3: einen gegenüber einer praktischen Ausführungsform leicht vergrößert gezeichneten Teillängsschnitt des Gehäuses der Sicherheitsvorrichtung gemäß dem Ausführungsbeispiel der Erfindung;
- Fig. 4: einen gegenüber Fig. 3 etwa um den Faktor 2 vergrößert gezeichneten Teilschnitt des in Fig. 3 mit IV bezeichneten Bereichs;
- Fig. 5: eine gegenüber einer praktischen Ausführungsform etwa um den Faktor 1,5 vergrößert und teilweise aufgebrochen gezeichnete Seitenansicht eines pyrotechnischen Kraftelements für den Einsatz bei der erfindungsgemäßen Sicherheitsvorrichtung; und
- Fig. 6: eine im Maßstab von Fig. 5 und demgegenüber um 90° verdreht gezeichnete Endansicht des pyrotechnischen Kraftelements von Fig. 5.

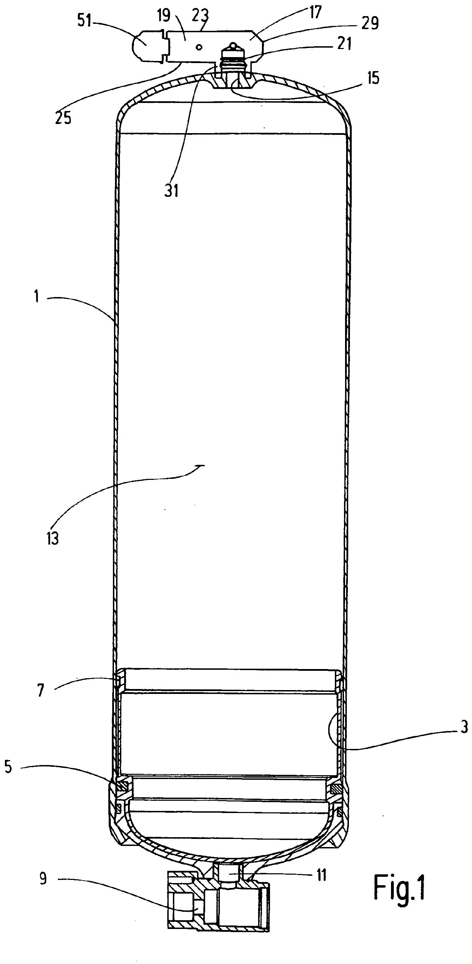

Die Fig. 1 zeigt einen hydropneumatischen Druckspeicher 1, der beispielsweise bei Fahrzeugen mit hydrostatischem Antrieb, die mit einer Energie-Rückgewinnungseinrichtung versehen sind, einsetzbar ist, um Bremsenergie zu speichern, vgl. hierzu das bereits erwähnte Dokument DE 10 2008 062 836 B3. Bei dem in Fig. 1 gezeigten Druckspeicher 1 handelt es sich um einen Kolbenspeicher, dessen Speicherkolben 3 in der bei derartigen Speichern üblichen Weise mit mindestens einer Kolbendichtung 5 und mindestens einer Kolbenführung 7 versehen und innerhalb des Druckspeichers 1 bewegbar geführt ist. In Fig. 1 ist der Kolben 3 in einer Stellung gezeigt, bei der die mit einem Hydraulikanschluss 9 verbundene Ölseite 11 drucklos ist, so dass sich der Kolben 3 in der Endlage befindet, bei der das Volumen der Gasseite 13 den Größtwert besitzt. An dem der Ölseite 11 entgegengesetzten Ende des Druckspeichers 1 befindet sich ein Gasanschluss 15, über den die Gasseite 13 mit einem Arbeitsgas, wie Stickstoff, befüllbar ist. Bei einem Einsatz zur Speicherung von Bremsenergie bei Energie-Rückgewinnungseinrichtungen können im Betrieb auf der Gasseite 13 hohe Gasdrücke auftreten, so dass Sicherheitsmaßnahmen zu treffen sind, die im Stör- oder Gefahrenfall einen sicheren Druckabbau bewirken. Daher ist es Stand der Technik, am Gasanschluss 15 eine Sicherheitsvorrichtung 17 vorzusehen, die den sicheren Druckabbau durch Ansprechen einer Bersteinrichtung bewirkt.

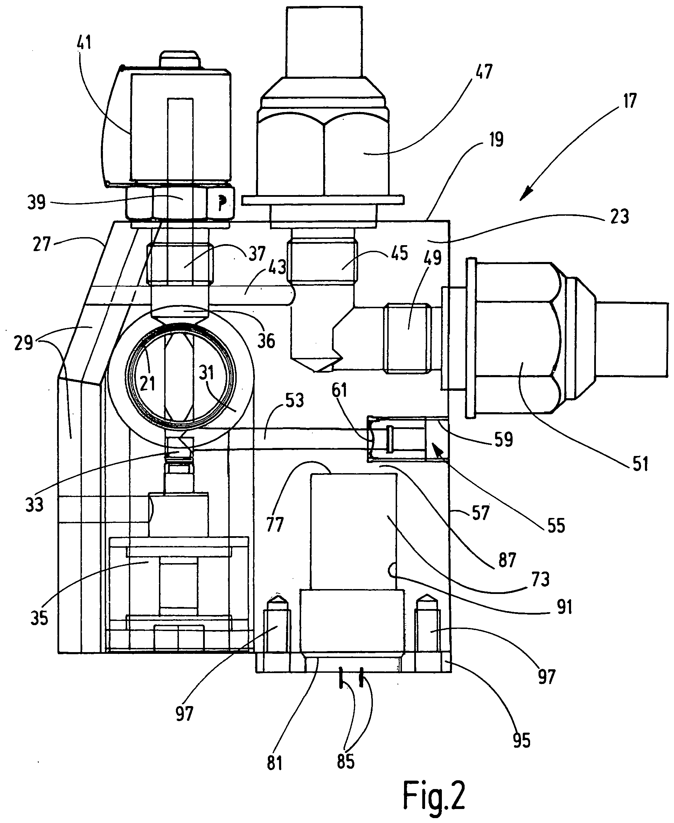

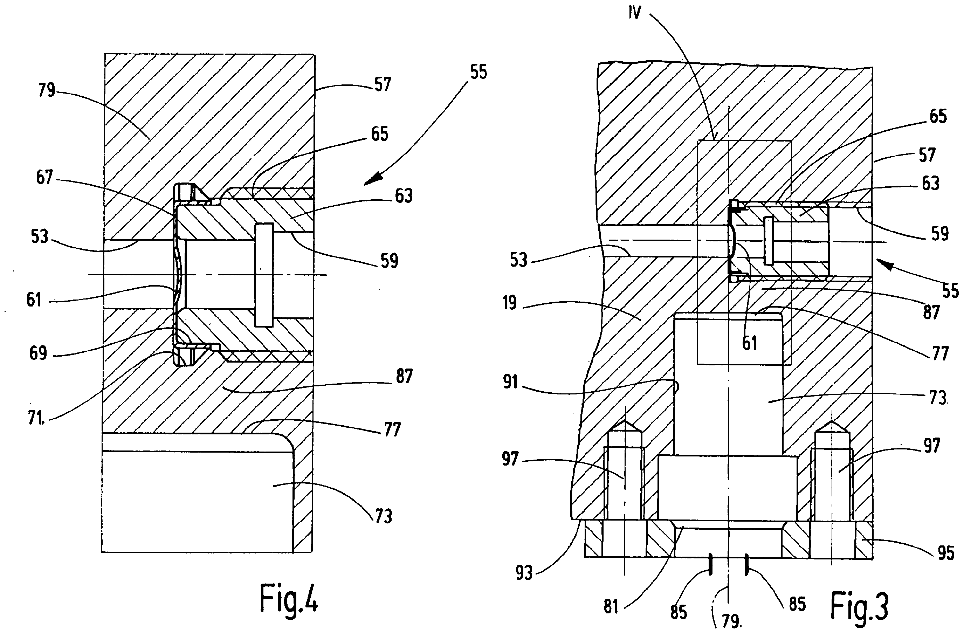

Die Fig. 2 bis 4 zeigen nähere Einzelheiten des Gehäuses 19 der erfindungsgemäßen Sicherheitsvorrichtung 17. Das Gehäuse 19 hat die Form eines Gehäuseblocks mit ebenflächiger Oberseite 23 und in hierzu paralleler Ebene verlaufender Unterseite 25, s. Fig. 1. Wie die Fig. 3 zeigt, ist der Block, abgesehen von einem abgeschrägten Eckbereich 27, rechteckförmig. In dieser Figur ist die Oberseite 23 des Blocks als durchsichtig dargestellt, so dass innere Kanäle, diesen zugeordnete Anschlüsse sowie zugeordnete Funktionselemente in Fig. 2 sichtbar sind. Aus dieser Figur ist auch ersichtlich, dass in der Nähe der mit einer Abschrägung 29 versehenen Langseite ein von der Unterseite 25 (Fig. 1) vorstehender Anschlussstutzen 31 vorgesehen ist, in dem das Gewinde der Verschraubung 21 für die Verbindung mit dem Gasanschluss 15 ausgebildet ist. Von dem so gebildeten Druckanschluss zweigt ein erster Kanal 33 ab, der zu einer Schmelzsicherung 35 üblicher Bauweise führt. Auf der dem Kanal 33 entgegengesetzten Seite zweigt vom Druckanschluss ein zweiter Kanal 36 ab, der zu einem Füllanschluss 37 führt, an dem ein Füllventil 39 üblicher Bauart mit einer an der Gehäuseaußenseite befindlichen Abdeckhaube 41 angeordnet ist. Vom zweiten Kanal 36 zweigt rechtwinklig ein dritter Kanal 43 ab. Dieser führt zu einem Anschluss 45 für einen an der Gehäuseaußenseite befindlichen Drucksensor 47 sowie zu einem Anschluss 49 für einen an der Gehäuseaußenseite befindlichen Temperatursensor 51.

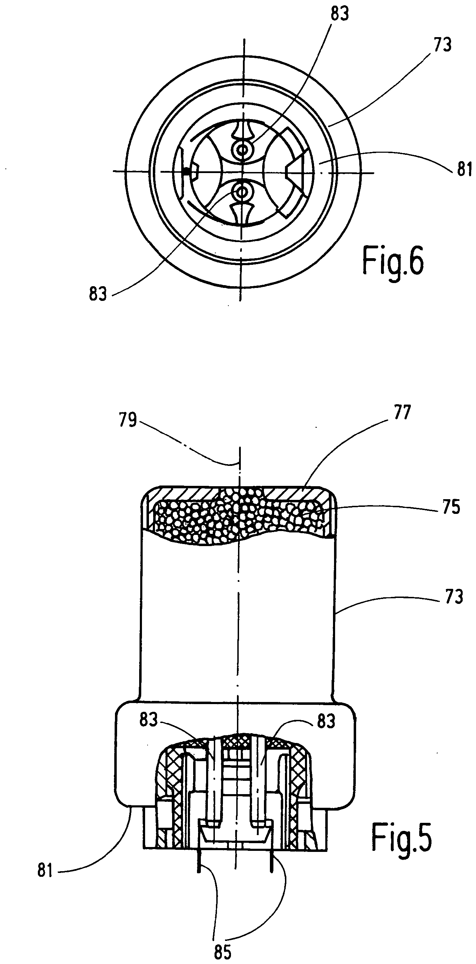

An der Stelle des Abzweigs des ersten Kanals 33 vom Druckanschluss zweigt ein weiterer, zum dritten Kanal 43 parallel verlaufender vierter Kanal 53 ab, der die Verbindung der erfindungsgemäßen Bersteinrichtung 55 mit dem Druckanschluss bildet. Die Fig. 3 bis 6 zeigen die näheren Einzelheiten der Bersteinrichtung 55 und der zum gesteuerten Auslösen der Bersteinrichtung 55 erfindungsgemäß vorgesehenen Funktionselemente. Wie Fig. 3 und insbesondere die vergrößerte Darstellung der Fig. 4 zeigen, ist der Kanal 53 vom an der Gehäuseseite 57 mündenden Ausgang 59 durch eine Berstscheibe 61 getrennt. Diese ist, wie Fig. 4 am deutlichsten zeigt, mittels eines Gewindeeinsatzes 63, der von der Gehäuseseite 57 her in eine Gewindebohrung 65 des Gehäuses 19 eingeschraubt ist, festgelegt. Dabei klemmt der Einsatz 63 die Berstscheibe 61 gegen eine am inneren Ende der Gewindebohrung 65 gebildete Schulter 67 fest, wobei der Umfangsrand 69 der Berstscheibe 61 innerhalb einer am Ende der Gewindebohrung 65 befindlichen Ringnut 71 um das Ende des Einsatzes 63 umgelegt ist.

Für das mittels eines ansteuerbaren Kraftelements bewirkte Auslösen der Berstscheibe 61 der Bersteinrichtung 55 ist beim vorliegenden Ausführungsbeispiel eine pyrotechnische Einrichtung mit einer Patrone 73 vorgesehen, die eine elektrisch zündbare Treibladung 75 enthält. Diese ist in der Patrone 73 derart gekammert, dass bei gezündeter Treibladung 75 eine von der Patronenoberseite 77 ausgehende Explosionsdruckwelle mit entlang der Patronenlängsachse 79 verlaufender Wirkrichtung ausgestoßen wird. Für die elektrische Zündung weist die Patrone 73 an dem der Oberseite 77 entgegengesetzten Ende 81 Kontaktstifte 83 mit Anschlussfahnen 85 für Zündleitungen auf. Wie am deutlichsten Fig. 3 zeigt, ist die Patrone 73 in einer Gehäusebohrung 91, die von der Gehäuseseite 93 ausgeht, mittels eines Halteringes 95 festgelegt, der mittels Schrauben 97 am Gehäuse 19 befestigt ist.

Wie die Fig. 3 und 4 zeigen, befindet sich die Oberseite 77 der Patrone 73 mit dem Austrittsbereich der Explosionsdruckwelle an einem Wandstück 87 des Gehäuses 19, das unmittelbar an die Bersteinrichtung 55 angrenzt, wobei die entlang der Achse 79 verlaufende Wirkrichtung der Explosionsdruckwelle in der Ebene der Berstscheibe 61 verläuft. Die resultierende Verformung des Wandstücks 87, insbesondere im Bereich der die Berstscheibe 61 klemmenden Schulter 67, führt zur Zerstörung des Verschlusses des Kanals 53 durch die Berstscheibe 61 und dadurch zu dem über den Kanal 53 erfolgenden Druckabbau in Richtung der freien Umgebung des Blocks. Unabhängig von einer Auslösung der Berstscheibe 61 durch aufgebauten Überdruck und unabhängig von einem durch Übertemperatur bewirkten Druckabbau durch Ansprechen der Schmelzsicherung 35 ermöglicht die Erfindung das gesteuerte Auslösen der Bersteinrichtung 55 aufgrund anderweitiger Signalgabe bei Auftreten einer Stör- oder Gefahrensituation. Ohne zusätzliche Sensorik kann daher in einem Crashfall das Auslösesignal eines Airbag genutzt werden.

Während beim gezeigten Ausführungsbeispiel die unmittelbare Wirkung der Explosionsdruckwelle einer pyrotechnischen Patrone 73 zur Auslösung der Bersteinrichtung 55 genutzt ist, versteht sich, dass der Bruch der Berstscheibe 61 durch mechanische Einwirkung eines mechanischen Kraftelements bewirkt werden kann. Beispielsweise kann anstelle einer eine Explosionsdruckwelle erzeugenden pyrotechnischen Einrichtung ein pyrotechnisches Element vorgesehen sein, das bei Zündung den Antrieb für einen bewegbaren Stift (nicht dargestellt) erzeugt, der die Berstscheibe durch mechanische Einwirkung zerstört. Gleichwohl ist bei der gezeigten unmittelbaren Nutzung der Explosionsdruckwelle die Sicherheitsvorrichtung mit geringem Aufwand in einfacher Bauweise realisierbar.

## Patentansprüche

1. Sicherheitsvorrichtung mit einem Gehäuse (19), einer Bersteinrichtung (55) und einer Anschlussstelle für einen Druckspeicher (1), der über die Anschlussstelle gasseitig mit der Bersteinrichtung (55) verbindbar ist, wobei die Bersteinrichtung (55) mittels eines ansteuerbaren Kraftelements (73) auslösbar ist, die im ausgelösten Zustand eine gasseitige Entleerung des Druckspeichers (1) erlaubt, wobei die Bersteinrichtung (55) eine Berstscheibe (61) aufweist, die beim Ansteuern des Kraftelements (73) auslöst, wobei das Kraftelement ein pyrotechnischer Gegenstand (73) ist, der bei gezündeter Treibladung (75) ein Wandstück (87) des Gehäuses (19) derart verformt oder zerstört, dass die darin aufgenommene Bersteinrichtung (55) auslöst, wobei die Berstscheibe (61) der Bersteinrichtung (55) in einem druckführenden Kanal (53) im Gehäuse (19) festgelegt ist und diesen Kanal (53) druckdicht abschließt, der auf die Gasseite (13) des Druckspeichers (1) führbar ist, wobei die Berstscheibe (61) innerhalb des Kanals (53) in einer gemeinsamen Ebene mit der Wirkrichtung (79) des pyrotechnischen Kraftelements (73) liegt und wobei das mittels der Treibladung (75) zerstör- oder verformbare Wandstück (87) des Gehäuses (19) quer zu dieser Ebene verläuft, **dadurch gekennzeichnet, dass** der Kanal (53) in die freie Umgebung (57) ausmündet, dass die Berstscheibe (61) mittels eines Gewindeeinsatzes (63) festgelegt ist, der von der Gehäuseumgebungsseite (57) her in eine Gewindebohrung (65) des Kanals (53) eingeschraubt ist und der die Berstscheibe (61) gegen eine am inneren Ende der Gewindebohrung (65) gebildete Schulter (67) festklemmt, und dass der Umfangsrand (69) der Berstscheibe (61) innerhalb einer am Ende der Gewindebohrung (65) befindlichen Ringnut (71) um das Ende des Einsatzes (63) umgelegt ist.

2. Sicherheitsvorrichtung nach Anspruch 1, **dadurch gekennzeichnet, dass** die Ansteuerung des Kraftelements (73) an eine Sensorik gekoppelt ist, insbesondere an die Sensorik eines Airbag, die beim Auslösen des Airbag auch das Kraftelement (73), vorzugsweise zeitgleich, betätigt.

3. Sicherheitsvorrichtung nach Anspruch 1 oder 2, **dadurch gekennzeichnet, dass** das Kraftelement (73) gekammert an seiner vorderen Stirnseite (77) die pyrotechnische, elektrisch zu zündende Treibladung (75) trägt, die an das Wandstück (87) anschließt, an das die Bersteinrichtung (55) zumindest teilweise angelegt ist.

4. Sicherheitsvorrichtung nach einem der vorstehenden Ansprüche, **dadurch gekennzeichnet, dass** das Gehäuse (19) zumindest teilweise weitere Funktionselemente aufweist, wie
- einen Drucksensor (47),
- einen Temperatursensor (51),
- eine Schmelzsicherungseinrichtung (35),
- einen Befüllanschluss (39) für Druckgas und/oder
- einen Prüfanschluss für eine Prüfeinrichtung.

5. Sicherheitsvorrichtung nach Anspruch 4,
**dadurch gekennzeichnet, dass** alle im Gehäuse (19) verwendeten Funktionselemente, einschließlich der Bersteinrichtung (55) an ein gemeinsames Kanalsystem (33, 36, 43, 53) angeschlossen sind, das mit der Gasseite (13) des Druckspeichers (1) druckführend verbindbar ist.

6. Sicherheitsvorrichtung nach Anspruch 4 oder 5,
**dadurch gekennzeichnet, dass** der Druckspeicher ein Kolbenspeicher (1) ist, der Teil eines Energie-Rückgewinnungssystems bei einem Kraftfahrzeug ist und der auf seiner Speicher-Gehäuseseite (13) mit dem Druckgas mit dem blockartig aufgebauten Gehäuse (19) mit seinen einzelnen Funktionselementen verbindbar ist.

## Claims

1. Safety device having a housing (19), a rupture device (55) and a connection point for a pressure accumulator (1) which pressure accumulator can be connected to the rupture device (55) via the connection point, wherein the rupture device (55) can be triggered by means of an activatable force element (73) which, in the triggered state, permits emptying of the pressure accumulator (1) on the gas side, wherein the rupture device (55) has a rupture disc (61) which trips when the force element (73) is activated, wherein the force element is a pyrotechnic object (73) which deforms or destroys a wall section (87) of the housing (19) when the propellant (75) is ignited, in such a manner that the rupture device (55) accommodated therein activates, wherein the rupture disc (61) of the rupture device (55) is fixed in a pressurised duct (53) in the housing (19) and closes off this duct (53) in a pressure-tight manner, it being possible to route said duct to the gas side (13) of the pressure accumulator (1), wherein the rupture disc (61) is located inside the duct (53) in a common plane with the operating direction (79) of the pyrotechnic force element (73) and wherein the wall section (87) of the housing (19), which can be destroyed or deformed by the propellant (75), extends transverse to this plane, **characterised in that** the duct (53) opens out into the open environment (57), that the rupture disc (61) is fixed by means of a threaded insert (63), which is screwed into a threaded hole (65) of the duct (53) from the environment side of the housing (57) and which clamps the rupture disc (61) against a shoulder (67) formed at the inner end of the threaded hole (65), and that the peripheral edge (69) of the rupture disc (61) is folded down around the end of the insert (63) inside an annular groove (71) which is located at the end of the threaded hole (65).

2. Safety device according to claim 1, **characterised in that** activation of the force element (73) is coupled to a sensor system, in particular to the sensor system of an airbag which, when the airbag is deployed, also actuates the force element (73), preferably simultaneously.

3. Safety device according to claim 1 or 2, **characterised in that** the force element (73) bears the pyrotechnic propellant (75), which is to be ignited electrically, encapsulated on its front end face (77) which adjoins the wall section (87) on which the rupture device (55) at least partially rests.

4. Safety device according to one of the preceding claims, **characterised in that** the housing (19) at least partially comprises further functional elements, such as
- a pressure sensor (47),
- a temperature sensor (51),
- a fusible cutout device (35),
- a filling connection (39) for compressed gas and/or
- a test connection for a test device.

5. Safety device according to claim 4, **characterised in that** all functional elements used in the housing (19), including the rupture device (55), are connected to a common duct system (33, 36, 43, 53) which can be connected in a pressurised manner to the gas side (13) of the pressure accumulator (1).

6. Safety device according to claim 4 or 5, **characterised in that** the pressure accumulator is a piston accumulator (1) which is part of an energy recovery system in a motor vehicle and which can be connected on its accumulator housing side (13) with the compressed gas to the block-like housing (19) with its individual functional elements.

## Revendications

1. Système de sécurité comprenant une enveloppe (19), un dispositif (55) d'éclatement et un point de raccordement d'un accumulateur (1) de pression, qui par le point de raccordement peut communiquer du côté du gaz avec le dispositif (55) d'éclatement, dans lequel le dispositif (55) d'éclatement peut être déclenché au moyen d'un élément (73) de force pouvant être commandé, qui, à l'état déclenché, permet de vider du côté du gaz l'accumulateur (1) de pression, le dispositif (55) d'éclatement ayant un disque (61) de rupture, qui se déclenche à la commande de l'élément (73) de force, l'élément de force étant un objet (73) pyrotechnique qui, lorsqu'une charge (75) propulsive est amorcée, déforme ou détruit une pièce (87) de la paroi de l'enveloppe (19) de manière à déclencher le dispositif (55) d'éclatement qui y est reçu, dans lequel le disque (61) de rupture du dispositif (55) d'éclatement est fixé dans un conduit (53) conduisant la pression de l'enveloppe (19) et ferme ce conduit (53) d'une manière étanche à la pression, conduit qui peut aller au côté (13) de gaz de l'accumulateur (1) de pression, dans lequel le disque (61) de rupture se trouve à l'intérieur du conduit (53) dans un plan commun avec la direction (79) d'action de l'élément (73) de force pyrotechnique et dans lequel la pièce (87) de paroi, pouvant être détruite ou déformée au moyen de la charge (75) propulsive, de l'enveloppe (19) s'étend transversalement à ce plan, **caractérisé en ce que** le conduit (53) débouche dans l'environnement (57) libre, **en ce que** le disque (61) de rupture est fixé au moyen d'un insert (63) fileté, qui est vissé du côté (57) de l'environnement de l'enveloppe dans un taraudage (65) du conduit (53) et qui serre le disque (61) de rupture sur un épaulement (67) formé à l'extrémité intérieure du taraudage (65), et **en ce que** le bord (69) de pourtour du disque (61) de rupture est mis autour de l'extrémité de l'insert (63) dans une rainure (71) annulaire se trouvant à l'extrémité du taraudage (65).

2. Système de sécurité suivant la revendication 1, **caractérisé en ce que** la commande de l'élément (73) de force est couplée à un dispositif de capteur, notamment à un dispositif de capteur d'un coussin d'air, qui au déclenchement du coussin d'air actionne, de préférence en même temps, également l'élément (73) de force.

3. Système de sécurité suivant la revendication 1 ou 2, **caractérisé en ce que** l'élément (73) de force porte, chambrée à son côté (77) frontal avant, la charge (75) propulsive pyrotechnique à amorcer électriquement, qui se raccorde à la pièce (87) de paroi où le dispositif (55) d'éclatement est mis au moins en partie.

4. Système de sécurité suivant l'une des revendications précédentes, **caractérisé en ce que** l'enveloppe (18) a au moins en partie d'autres éléments fonctionnels, comme
- un capteur (47) de pression,
- un capteur (51) de température,
- un dispositif (35) de sécurité à fusible,
- un raccord (39) de remplissage de gaz comprimé et/ou
- un raccord de contrôle pour un dispositif de contrôle.

5. Système de sécurité suivant la revendication 4, **caractérisé en ce que** tous les éléments fonctionnels utilisés dans l'enveloppe (19), y compris le dispositif (55) d'éclatement sont raccordés à un système (33, 36, 43, 53) commun de canalisation, qui peut communiquer, en conduisant la pression, avec le côté (13) du gaz de l'accumulateur (1) de pression.

6. Système de sécurité suivant la revendication 4 ou 5, **caractérisé en ce que** l'accumulateur de pression est un accumulateur (1) à piston, qui fait partie d'un système de récupération de l'énergie dans un véhicule automobile et qui peut, du côté (13) de l'enveloppe de l'accumulateur, être relié, par le côté du gaz, à l'enveloppe (19) constituée sous la forme d'un bloc avec ses divers éléments fonctionnels.
